(19) Europäisches Patentamt

European Patent Office

Office européen des brevets

(11) **EP 2 962 033 B1**

(12) **EUROPEAN PATENT SPECIFICATION**

(45) Date of publication and mention
of the grant of the patent:
**07.02.2018 Bulletin 2018/06**

(21) Application number: **14707974.3**

(22) Date of filing: **26.02.2014**

(51) Int Cl.:
*F16M 11/04* (2006.01)     *F16M 11/10* (2006.01)
*F16M 11/38* (2006.01)     *F16M 13/00* (2006.01)
*F16M 13/02* (2006.01)

(86) International application number:
**PCT/EP2014/053704**

(87) International publication number:
**WO 2014/131787 (04.09.2014 Gazette 2014/36)**

(54) **MULTIPLE FOOTPRINT STAND FOR A TABLET COMPUTER**

STÄNDER MIT MEHREREN STANDFLÄCHEN FÜR EINEN TABLET-COMPUTER

SOCLE À SURFACES DE CONTACT MULTIPLES POUR TABLETTE TACTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2013 US 201313781046**

(43) Date of publication of application:
**06.01.2016 Bulletin 2016/01**

(73) Proprietor: **Frenzel, Berend
4056 Basel (CH)**

(72) Inventor: **Frenzel, Berend
4056 Basel (CH)**

(74) Representative: **Schulz Junghans
Patentanwälte PartGmbB
Großbeerenstraße 71
10963 Berlin (DE)**

(56) References cited:
**WO-A1-2012/054976     DE-U1-202011 102 783
US-A1- 2012 261 542     US-B1- 8 245 843**

**Description**

BACKGROUND

Tablet computers, or simply tablets, are enjoyingmore and more popularity as sales figures of recent years show, and will probably play an even bigger role in the near future. Examples of such prior art tablets are the "iPad" and "iPad mini" by Apple, "Kindle" by Amazon, "Slate" by Hewlett-Packard, "Iconia" by Acer, "XPS 10" by Dell, "Ideatab" and "Thinkpad" by Lenovo, "Galaxy Tab" by Samsung, and "EeeSlate" by Asus. Minimal slim design, simplicity, and light weight are principal aspects that make the tablets extremely mobile and therefore attractive. Nevertheless, the handling and support for the actual use of these devices is not solved or even offered by their design. It is necessary to use an additional device for handling and support. US2012/0261542 A1 and WO2012/054976 disclose known tablet computer stands for supporting tablet computers. Support devices in the prior art are principally the following design types:

- One-piece stands that offer one position with a fixed viewing angle, mostly for horizontal and vertical formats. Some of the stands offer additional angles by changing the position on the same stand. One thing they all have in common is having only one single footprint.
- Multipartite stands with adaptation mechanisms offer a variety of viewing angles and mostly function with retaining elements on the back.

SUMMARY

It is an object to provide an improved stand for a tablet computer.

In a tablet computer stand for supporting a computer shaped as a tablet on a support surface, at least first and second footprints joined with each other in such a manner that they are positionable or positioned at an angle are provided.

At a front end of the first footprint, a receiving surface is provided receiving an end of the tablet to support the tablet on the stand. The footprints are dimensioned and positionable or positioned relative to the tablet end receiving surface such that the stand with the tablet thereon is stable when either the first or the second footprint is resting on said support surface. The entire stand is of one piece integral construction. For instance, the stand is comprised of one-piece plastic construction.

In order to ensure a stable stand, an angle between the tablet end receiving surface and the surface of the first footprint should be in the range of 70° to 85°, and an angle between the tablet end receiving surface and the surface of the second footprint should be in the range of 40° to 60°, wherein the respective angle is measured to the outer surface of the respective footprint providing a part of the surface of the convex shape.

Preferably, at least three footprints are provided and a first angle is defined between the first and second footprints and a second angle is also defined between the second and third footprints, or at least four footprints are provided and a first angle is provided between the first and second footprints, a second angle is provided between the second and third footprints, and a third angle is provided between the third and fourth footprints.

In case of only three footprints an angle between the tablet end receiving surface and the surface of the first footprint should be in the range of 70° to 85°, an angle between the tablet end receiving surface and the surface of the second footprint should be in the range of 40° to 60°, and an angle between the tablet end receiving surface and the surface of the third footprint should be in the range of 15° to 30°, wherein the respective angle is measured to the outer surface of the respective footprint providing a part of the surface of the convex shape.

In case of four footprints an angle between the tablet end receiving surface and the surface of the first footprint should be in the range of 70° to 85°, an angle between the tablet end receiving surface and the surface of the second footprint should be in the range of 55° to 65°, and an angle between the tablet end receiving surface and the surface of the third footprint should be in the range of 23° to 42° and an angle between the tablet end receiving surface and the surface of the fourth footprint should be in the range of 12° to 22°, wherein the respective angle is measured to the outer surface of the respective footprint providing a part of the surface of the convex shape.

Each footprint may have a rectangular shape when viewed from above the footprint resting on said support surface.

The receiving surface may comprise a curved surface having a lip at a bottom end and an edge at a top end.

That curved surface may join with said front end of said first footprint at substantially a mid-point of the cross section of said curved surface.

The receiving surface may have an attachment element on a portion of said receiving surface for attachment to said tablet.

The attachment element may comprise a magnetic device or a suction device, said suction device comprising a suction foam or a suction cup tape.

Also, the receiving surface may have an aperture therein for allowing a plug to be passed there through for plugging into said tablet.

The footprints each may have top and bottom parallel planar surfaces or have a concave shape at a bottom surface for resting on said support surface.

The concave shape is only slightly concave, wherein the radius of the concavity is at least as big as the length of the respective footprint.

In a special embodiment, said first and second footprints being joined by a flexible material covering and attached to one side of the footprints, a portion of said flexible material forming an articulation where the first and second footprints abut one another at said angle such that in an open portion of the cover with the second footprint on said support surface, said angle between the first and the second footprints is maintained by abutting edges between said first and second footprints.

In that case, prteferably the receiving surface at said first footprint comprises at least one blade with an inside surface for grabbing said end of said tablet, said first footprint being hingeably attached at said blade so that said first and second footprints form a cover which can be folded around to cover a front screen of said tablet in a closed position. The footprints may comprise planar boards.

The inside surface for grabbing said end of said tablet should be a sticky surface in order to grab said end of said tablet.

In that embodiment, the planar boards of the footprints should be made of a stiff material, for instance made of plastic or wood.

Three footprints may be provided with articulations between the first and second, and second and third footprints.

Alternatively, four footprints are provided and respective articulations are provided between the first and second, second and third, and third and fourth footprints.

A material may be attached to one side of said flexible material for protecting the cover when it is laid against said screen in said closed position, wherein that material is softer and/ or thinner than the flexible material.

In each embodiment, the stand is one-piece and allows a change of viewing angle without use of a multi-piece mechanism.

The stand is stable with respect to the tablet and moves with the tablet and changes its position and angle with respect to said support surface.

That is, a tablet computer stand is provided for supporting a computer shaped as a tablet on a support surface, comprising:

the stand being of one piece construction and comprising at least first and second footprints joined at a fixed angle, at a front end of the first footprint a receiving surface receiving an end of the tablet to support the tablet on the stand, said receiving surface comprising a curved surface having an upper edge and a lip at a lower edge, said lip engaging said end of the tablet; and the footprints being dimensioned and positioned relative to the tablet end receiving surface such that the stand with the tablet thereon is stable when either the first footprint or the second footprint is resting on said support surface.

Further, a system comprising a stand according to the invention and a tablet computer is provided, wherein the tablet computer is rectangular with shorter and longer sides and has a vertical position with the longer sides sloped upwardly and a horizontal position with the longer sides extending horizontally, and with the tablet computer on the stand in the vertical position and a common center of gravity of the tablet computer plus the stand being defined, and wherein a perpendicular line intersecting with the first footprint passes through the common center of gravity and another line extending from a point where the first and second footprints meet at said angle also passes through the common center of gravity, a minimum angle between said perpendicular line and said another line is 10°.

Alternatively, a system comprising a stand according to the invention and a tablet computer is provided, wherein the tablet computer is rectangular with shorter and longer sides and has a vertical position with the longer sides extending upwardly and a horizontal position with the longer sides extending horizontally, and with the tablet computer on the stand in a horizontal position and a common center of gravity of the tablet computer plus the stand being defined, and wherein a perpendicular line intersecting with the second footprint passes through the common center of gravity and another line extending from a point where the first and second footprints meet at said angle also passes through the common center of gravity, a minimum angle between said perpendicular line and said another line is 5°.

In a further preferred embodiment of the system, the first footprint has a first perpendicular line intersecting therewith, the second footprint has a second perpendicular line intersecting therewith, and the first and the second perpendicular lines intersect at said common center of gravity of the tablet plus the stand when the tablet is supported by the stand.

That is, a computer stand system for resting on a support surface is provided, comprising a computer shaped as a rectangular tablet having long sides and short sides, in a vertical position of the tablet the long sides sloping upwardly and in a horizontal position of the tablet the short sides extending horizontally; a stand of one piece construction and comprising at least first and second footprints joined at an angle, at a front end of the first footprint a receiving surface receiving an end of said tablet to support the tablet on the stand; and the footprints being dimensioned and positioned relative to the receiving tablet surface such that the stand with the tablet thereon in either the vertical or horizontal positions is stable when either the first footprint or the second footprint is resting on said support surface.

Furthermore, a method for emission of optical and/ or aural information from a computing system, and/ or for input of information into a computing system is provided, comprising the following steps:

i) providing a tablet computer,

ii) providing a stand according to the invention,

iii) putting the tablet computer on the stand such that the tablet computer is supported by the stand,

iv) emitting optical and/ or aural information from the tablet computer, and/ or inputting information into the tablet computer.

The data inputted into the tablet computer may be stored and / or processed by the tablet computer and/ or by a computer network connected to the tablet computer.

Also, a use of a stand according to the invention for emission of optical and/ or aural information from a tablet computer is provided, wherein the tablet computer emitting the optical and/ or aural information is supported by the stand, and in addition a use of a stand according to the invention for inputting, storage and/ or processing information in a tablet computer is provided, wherein the tablet computer receiving, storing and/ or processing the information is supported by the stand.

BRIEF DESCRIPTION OF THE DRAWINGS

Fig. 1A shows a stand with two footprints for two possible viewing angles with a tablet in a vertical position;

Fig. 1B shows the two footprint stand but with the tablet in a horizontal position;

Fig. 2A shows a stand with three footprints for three possible viewing angles with a tablet in a vertical position;

Fig. 2B shows the three footprint stand but with the tablet in a horizontal position;

Fig. 2C shows a stand with three footprints at a first viewing angle;

Fig. 2D shows a stand with three footprints at a second viewing angle;

Fig. 2E shows a stand with three footprints at a third viewing angle;

Fig. 3A shows a stand with four footprints for four possible viewing angles with a tablet in a vertical position;

Fig. 3B shows the four footprint stand but with the tablet in a horizontal position;

Fig. 4A is a side view of the stand of Fig. 3A with the tablet in the vertical position and showing a minimum angle between a stable position and when the stand starts to tilt to a next or a previous footprint;

Fig. 4B is a side view of the stand of Fig. 3B with the tablet in the horizontal position and showing a minimum angle between a stable position and when the stand starts to tilt to a next or a previous footprint;

Fib. 5 is a perspective view of the four footprint stand;

Fig. 6 is a cross-sectional view of the four footprint stand taken along section line VI -VI in Fig. 5;

Fig. 7 is a perspective view of the four footprint stand with a vertically positioned tablet;

Fig. 8 is a side view of a four footprint stand with a wall mount section;

Fig. 9A is a side view of the four footprint stand of Fig. 3A with a vertically positioned tablet resting on a soft support surface like a duvet or pillow;

Fig. 9B is a side view of the stand of Fig. 3B with the tablet positioned horizontally on the duvet or pillow shown in Fig. 9A;

Fig. 9C shows an arc formed by footprints of the stand;

Fig. 10 is a four footprint flexible cover stand with a vertically positioned tablet with a cover in a closed position overlying a display screen of a tablet;

Fig. 11 is a perspective view of the flexible cover stand of Fig. 10 but with the cover in a second position and resting on a second footprint;

Fig. 12 is a perspective view of the flexible cover stand of Fig. 10 in the open position and resting on a fourth footprint;

Fig. 13A is a cross-sectional view taken along a sectional line XIIIA-XIIIA in Fig. 11 with adjacent footprints horizontally aligned and showing an articulation connecfion; and

Fig. 13B is a cross-sectional view taken along a sectional line XIIIB-XIIIB in Fig. 11 of the articulation shown with adjacent footprints at an angle to one another;

Fig. 14 shows a tablet computer in front view and the difference between the position of the geometrical center and the position of the center of gravity;

Fig.15 shows a distance between these two centers of gravity depending on the alignment;

Fig. 16 shows a stand lifting the tablet computer;

Fig. 17 shows a stand having two receiving surfaces for the tablet computer;

Fig. 18a shows a three footprint stand with the tablet computer in vertical position;

Fig. 18b shows the same stand as shown in Fig. 18a with the tablet computer in horizontal position;

Fig. 19a shows a four footprint stand with the tablet computer in vertical position;

Fig. 19b shows the same stand as shown in Fig. 19a with the tablet computer in horizontal position;

Fig. 20 shows a three footprint stand as a foldable device with the tablet computer in vertical position;

Fig. 21 shows the same stand as shown in Fig. 20 as a foldable device with the tablet computer in horizontal position;

Fig. 22 shows the stand as a foldable device in a folded and in an unfolded condition;

Fig. 23 shows two times the same stand with two different adaptors for the use of tablet computers with different thicknesses.

DESCRIPTION OF PREFERRED EXEMPLARY EMBODIMENTS

For the purposes of promoting an understanding of the principles of the invention, reference will now be made to preferred exemplary embodiments/best mode illustrated in the drawings and specific language will be used to describe the same. It will nevertheless be understood that no limitation of the scope of the invention is thereby intended, and such alterations and further modifications in the illustrated embodiments and such further applications of the principles of the invention as illustrated as would normally occur to one skilled in the art to which the invention relates are included.

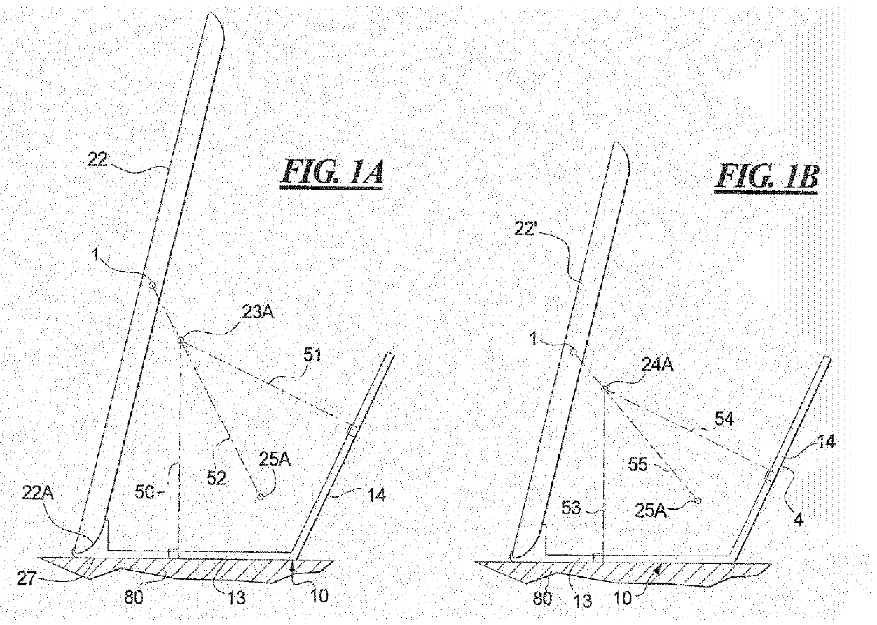

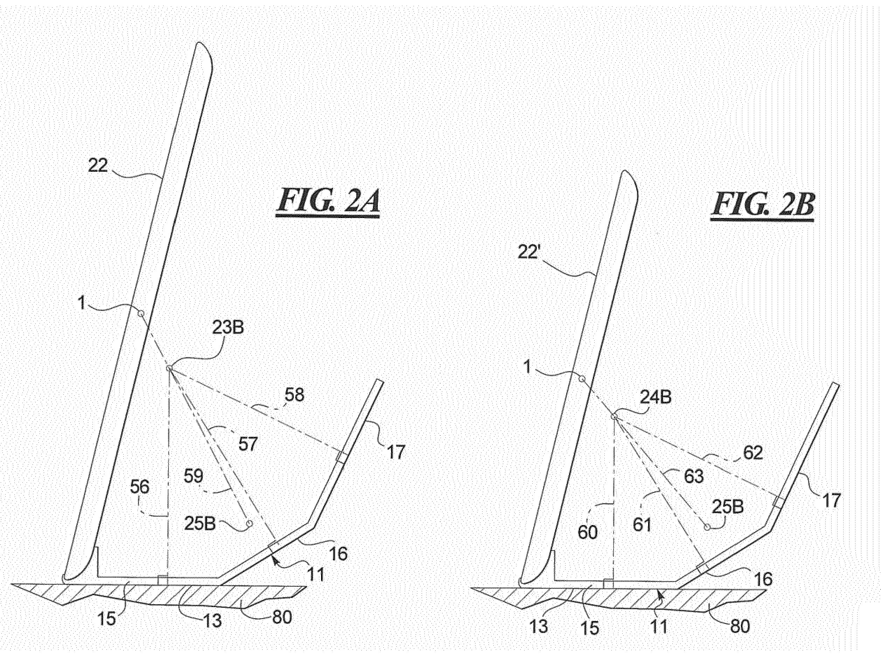

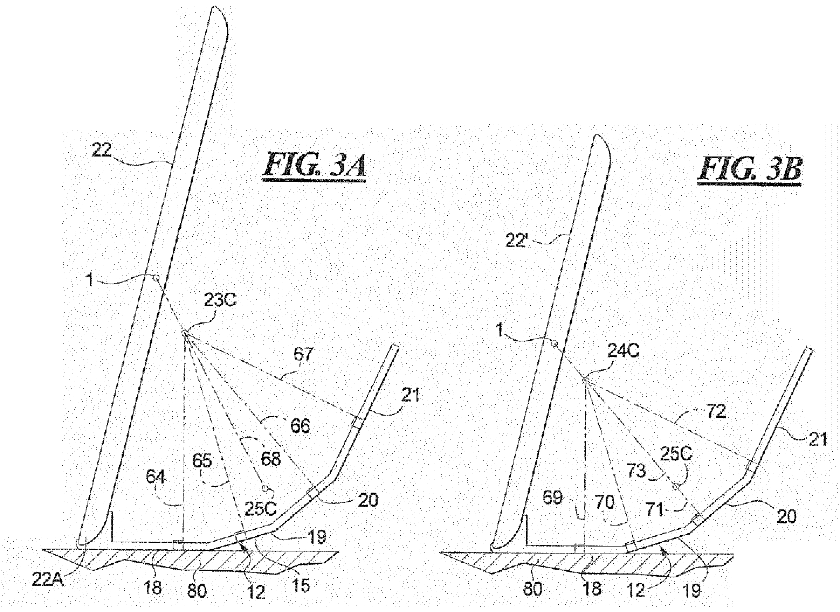

Three different preferred exemplary embodiments of the tablet computer stand are shown in Figures 1A/1B, 2A to 2E, and 3A/3B at 10, 11, and 12 respectively. The phrase "tablet computer" is inclusive of all tablet-like devices including smart phone like devices. A functional principle of the tablet stand is based on a one-piece body characterized by various non-parallel footprints 13 and 14 in Fig. 1A; 15, 16 and 17 in Fig. 2A; and 18, 19, 20, and 21 in Fig. 3A. In these figures a computer shaped as a tablet 22 resting on a stand is shown in a vertical position. The same stand is shown in Figures 1B, 2B, and 3B but with the tablet shown in a horizontal position 22'. The footprints are arranged in such a way that a common center of gravity 23A, 23B, 23C for the tablet 22 in the vertical position or 24A, 24B, 24C for the tablet 22 in the horizontal position on the respective stand is intersected by corresponding vertical projection lines from the respective footprints. in this regard see vertical projection lines 50 and 51 in Fig. 1A; 53 and 54 in Fig. 1B; 56, 57, and 58 in Fig. 2A; 60, 61, and 62 in Fig. 2B; 64, 65, 66, and 67 in Fig. 3A; and 69,70, 71, and 72 in Fig. 3B. These vertical projection lines indicate a direction of gravity force for each respective footprint when that respective footprint is lying on a flat horizontal surface. Furthermore note that the center of gravity of the respective tablet, the common center of gravity, and the center of gravity of the respective stand lie along a common straight line. In this regard see common line 52 in Fig. 1A; 55 in Fig. 1B; 59 in Fig. 2A; 63 in Fig. 2B; 68 in Fig. 3A; and 73 in Fig. 3B. Further note the respective stand center of gravities 25A in Fig. 1A and Fig. 1B; 25B in Fig, 2A and Fig. 2B; and 25C in Fig.3A and Fig. 3B.

The radial distribution of the footprints around the respective center of gravity 23A, 23B, 23C or 24A, 24B, 24C of the respective tablets combined with the respective stand allows the user to change the viewing angle of the tablet 22 or 22' just by tilting it from one footprint to the next. As shown in Figs. 1A/1B, two footprints 13 and 14 are shown. In Figures 2A/2B, three footprints 15, 16, and 17 are shown. In Fig. 3A/3B, four footprints 18, 19, 20, and 21 are shown. The tablet in the vertical 22 or horizontal 22' position always stays balanced and stable.

Note that in all drawing figures reference numeral 1 is the center of gravity of the tablet in the vertical 22 and horizontal 22' positions.

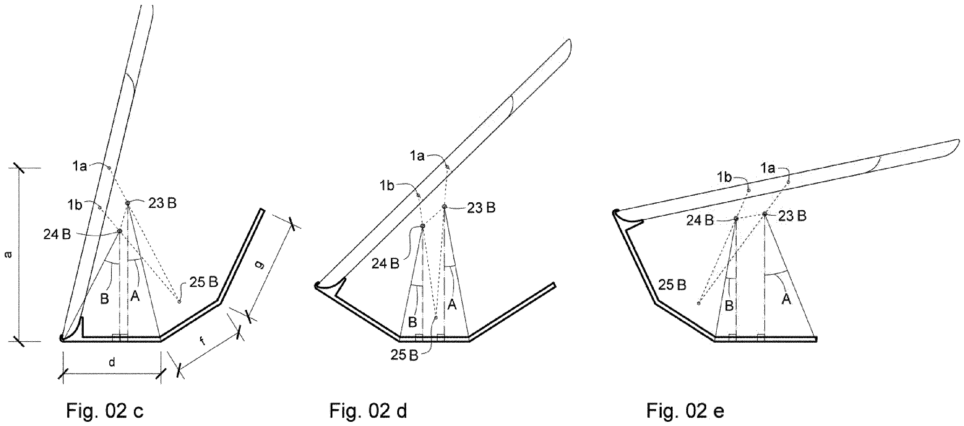

Fig. 2c -2e show the relation between the position of the respective center of gravity and angles of the footprints. Due to forces acting on the tablet when the tablet is used, the stand supporting the tablet should have greater stability against overturning around the edge of the respective footprint which is facing away from the receiving surface.

Preferably, the minimal angles A and B shown in Fig. 2c to 2e should be A≥10° and B ≥ 5°.

The bigger the angles A and B, the bigger is the stability against overturning.

The closer the centers of gravity 1a and 1b to each other, the bigger the respective angles A, B and C can be and/ or additional footprint may be provided maintaining the same stability against overturning.

As the touch screens of the computer tablets only need to be touched and not to be pressed, there are thus only small forces which are perpendicular to a plane of the screen and thus applied to the tablet and which do not endanger the stable position of the stand 10, 11, or 12.

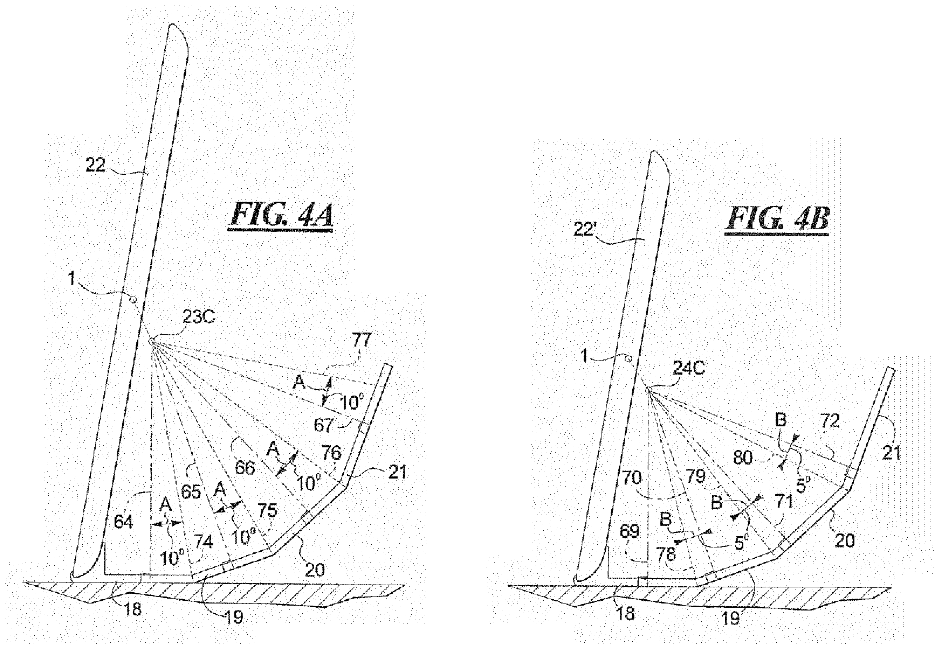

However, minimum angles between a stable position on one of the footprints and an angle when the stand starts to tilt to the next or previous footprint are predefined in the following way as shown in Figs. 4A and 4B:

- in Fig. 4B angle B is a minimum of 5° for tilting towards the viewer; and

- in Fig. 4A angle A is a minimum of 10° for tilting away from the viewer.

These angles A and B are determined empirically for an adequate use of the stand. The minimum angle for titling away from the viewer is higher because the forces acting on the tablet by the user's finger tapping on the screen which are perpendicular the plane of the screen have to be compensated for. See Figs. 4A and 4B.

Describing the above in more detail, see in Fig. 4A for the tablet 22 in a vertical configuration the angles A between the respective perpendicular projection lines 64, 65, 66 and 67 from the respective footprints and the lines 74, 75, and 76 (line 77 is not at an intersection of two adjacent footprints) running between the intersection of respective adjacent footprints and the common center of gravity 23C. Also see in Fig. 4B the angles B between the respective perpendicular projection lines from 69, 70, 71, and 72 from the respective footprints and the lines 78, 79, and 80 running between the intersection of the respective adjacent footprints and the common center of gravity 24C.

Increasing a weight of the stand (either by thickness or by a specific weight of the material of the stand) displaces the common center of gravity 23A, 23B, 23C, or 24A, 24B, and 24C towards the stand (towards a respective center of gravity 25A, 25B, 25C of the stand) which makes a distance between the common center of gravity of the tablet and the stand and the footprints smaller. This is a way to reduce a total size of the stand.

As the tablets are made for horizontal and vertical use (common center of gravity 23A, 23B, 23C in Figs. 1A, 2A, and 3A; or 24A, 24B, and 24C in Figs. 1B, 2B, and 3B) the footprints are thus arranged such that they work to provide stabilization for all three different two footprint, three footprint, and four footprint formats shown in Figures 1A, 2A, and 3A.

The number of footprints is at least two or more to offer different viewing angle settings as shown in Figures 1A/1B, 2A/2B, and 3A/3B.

The stand is made of one piece and therefore easy to produce, is damage resistant, reliable, and wearless.

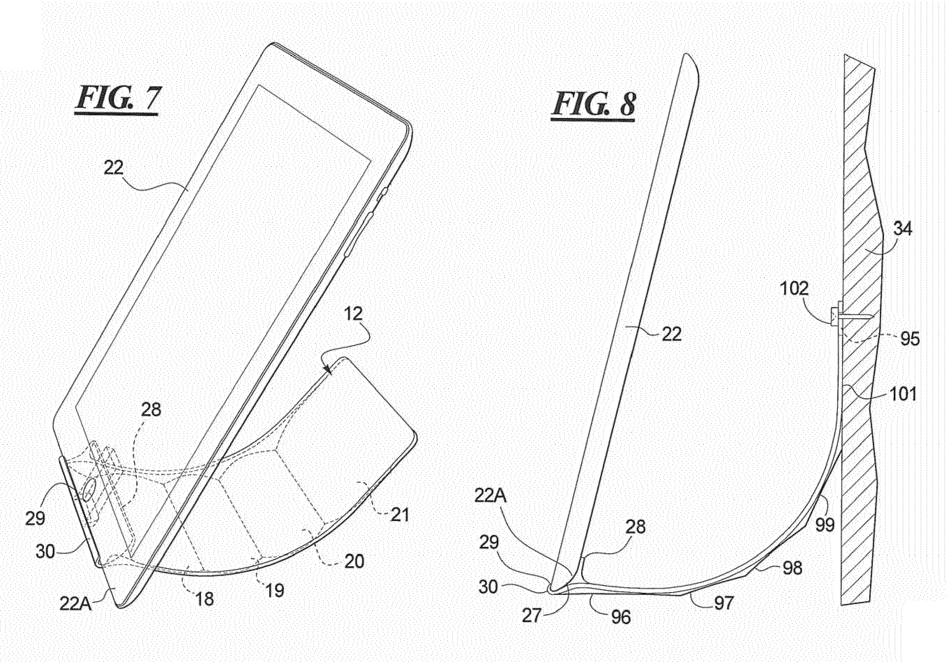

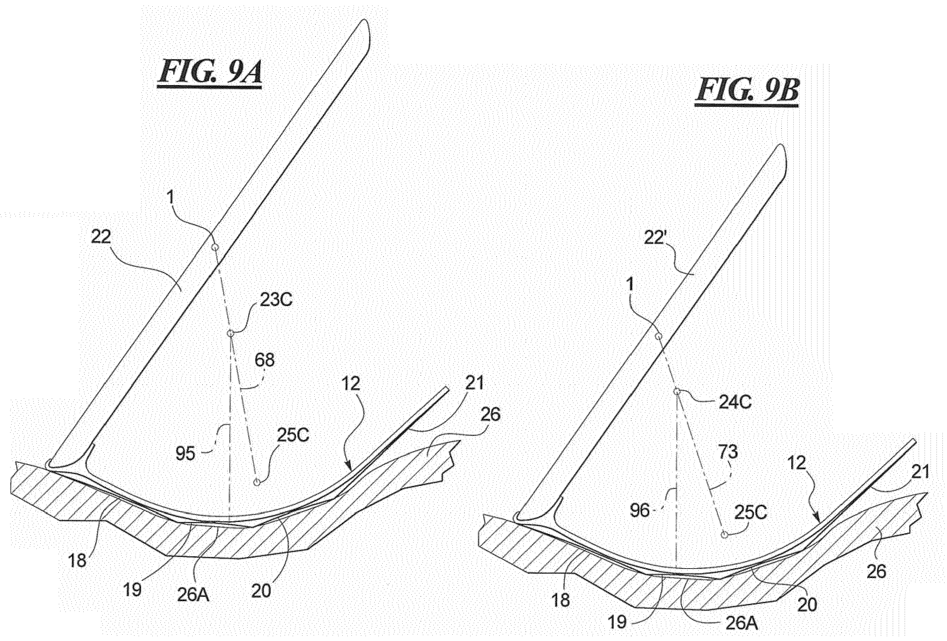

The plurality of footprints in combination offers a very good stand to position the tablet on both soft grounds like feather beds, duvets, pillows, or couches 26 such as shown in Figures 9A and 9B. This makes the stand work very well for use in bed or on a fold lying on the couch. As the common center of gravity 23C or 24C of the tablet and the stand is in the center of the arched surface in a fold such as shown at 26A in a bed or in a couch, it does not tend to tilt and is adjustable in any viewing angle (see Figures 9A and 8B). Also note that dot-dashed line 95 in Fig. 9A and the dot-dashed line 96 in Fig. 9B is not necessarily perpendicular to the foot print 19 since the line represents the gravitational force extending down from the common center of gravity 23C when the stand is resting on an arbitrary support surface which is not necessarily horizontal and flat.

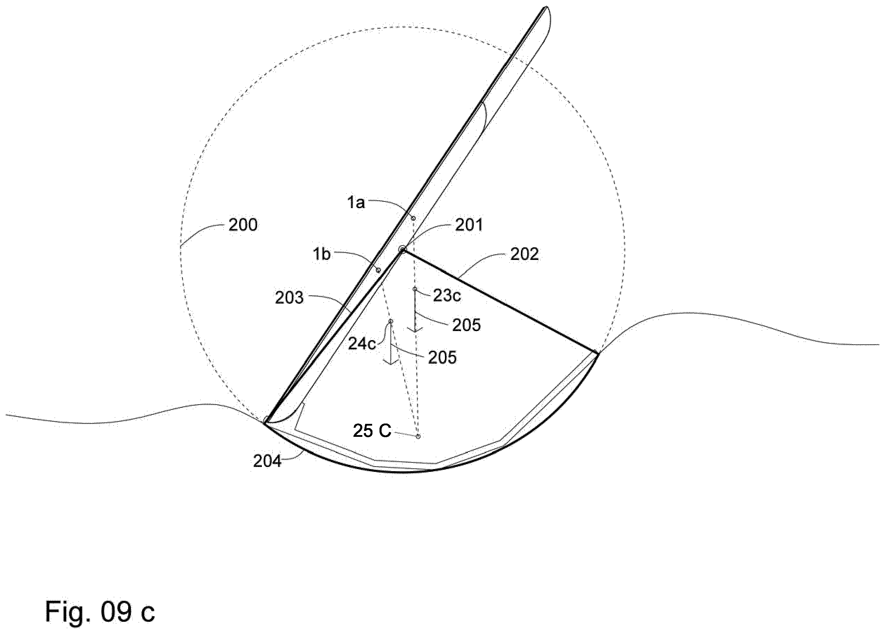

In the embodiment shown in Fig. 9c, there is a center of gravity of the tablet computer in horizontal or vertical position 1, a common center of gravity of tablet computer and stand for vertical position 23c, a common center of gravity of tablet computer and stand for horizontal position 24 c and a center of gravity of stand 25c. The common gravitational force of tablet computer and stand 205 acts in the common center of gravity of tablet computer and stand 23c, 24c, respectively.

The combination of footprints describes an arc 204 as a part of a circle 200 with its center in position 201. For the stability of the stand together with the tablet computer on a soft surface it is important that the common center of gravity 23c and 24c is positioned inside the segment of the circle formed by the arc 204 and its two sides 202 and 203. This way the stand always tends to stabilize and does not tend to fall over (principle of stability analog to boat without keel on the water). If the common center of gravity is positioned outside of this segment of the circle the stand would tend to fall over. The position of the common center of gravity changes with the weight of the stand in relation to the tablet computer. The heavier the stand the lower the position of the common center of gravity and the closer it is to the center of gravity of the stand. The stand together with the tablet computer becomes more stable on a soft surface the lower the common center of gravity is positioned and the more separated it is from the two sides 202 and 203.

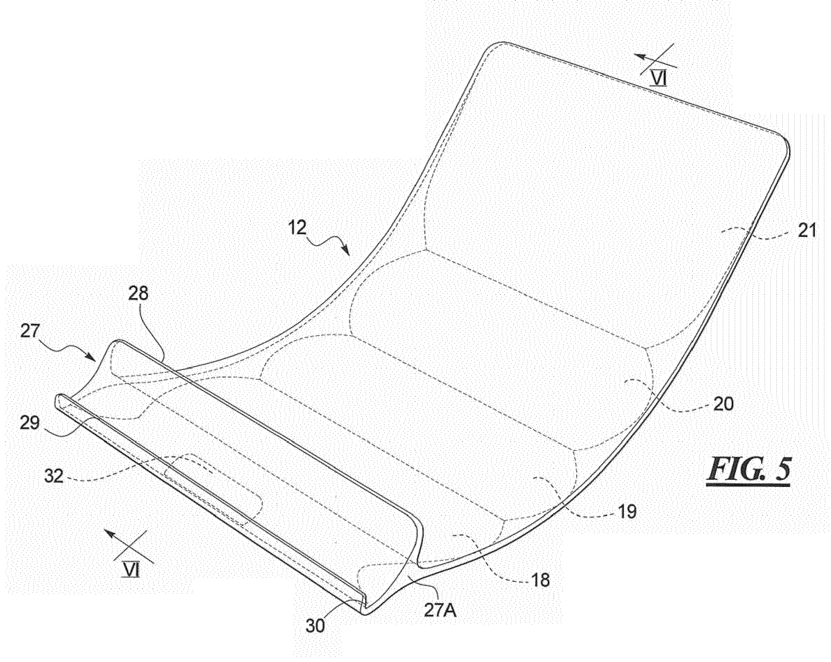

Referring now particularly to Figure 5, an inwardly curved surface 27 as a receiving surface for an end 22A of tablet 22 is attached to the first footprint 18 at a mid-point 27A at a back of the curved surface. This curved surface 27 serves as a support and an engagement for the tablet bottom end 22A (Fig. 3A and Fig. 7) of the tablet 22. The curved receiving surface 27 thus has a backrest edge 28 and a front edge 29 at an upper end of an upwardly turned lip 30.

Thus fixation of the tablet occurs by canting the tablet between the front edge 29 and lip 30, and the back edge 28. Also as may be seen in Fig. 1A and Fig. 8 the curved surface 27 can have a curvature approximately matching a bottom curvature of bottom end 22A of the tablet 22 (see Fig. 1A and Figs. 7 and 8).

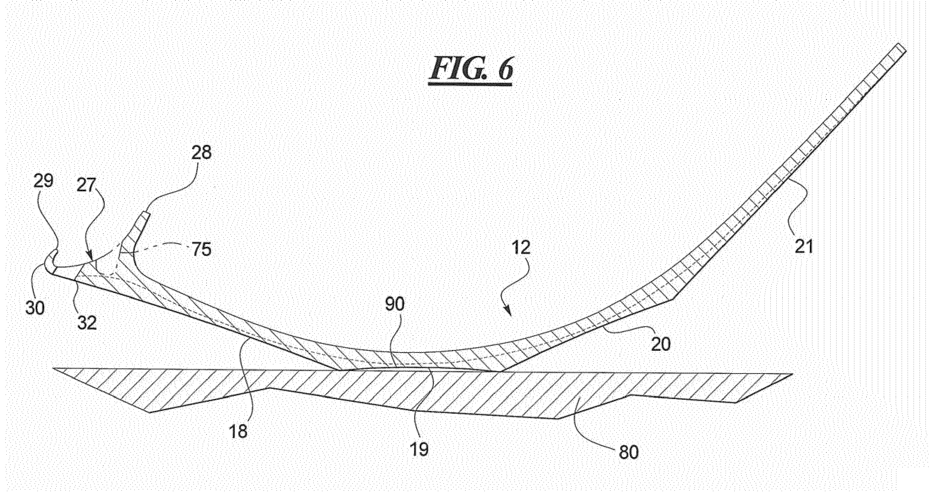

Methods for clamping or simply placing the tablet on a supporting surface (80 in all drawing figures showing a flat surface) can be possible as well. Additionally the tablet can be temporarily fixed with magnetic devices or suction devices like a micro- suction foam or a suction cup tape fitted to the curved surface 27 such as shown in dash lines at 75 in Fig. 6. With such a magnetic device, a micro-suction foam, or a suction cup tape the stand sticks to the tablet when lifting it up and carrying it around.

It is also possible that the stand can be fixed or even incorporated onto tablets.

The footprints such as shown at 18, 19, 20, and 21 are preferably slightly concavely curved as shown at 90 in Fig. 6 to minimize tilting by unevenness of the table top or items resting on the table top or surface 80 such as crumbs or the like.

As shown in Fig. 5 an opening 32 for a plug allows the plug in a data and electricity cable to be passed through to the tablet while the tablet is positioned vertically in the stand.

As shown in Fig. 8, an opening 95 may be provided in an attachment section 101 for an attachment screw 102 in a version of the stand having four footprints 96, 97, 98, 99 for mounting to a wall 34.

As shown most clearly in Fig. 6, the last footprint 21 in the four footprint version is long enough compared to the intermediate footprints 19 and 20, for example, to prevent the stand 12 from rolling backward and the tablet falling down by unexpected horizontal forces.

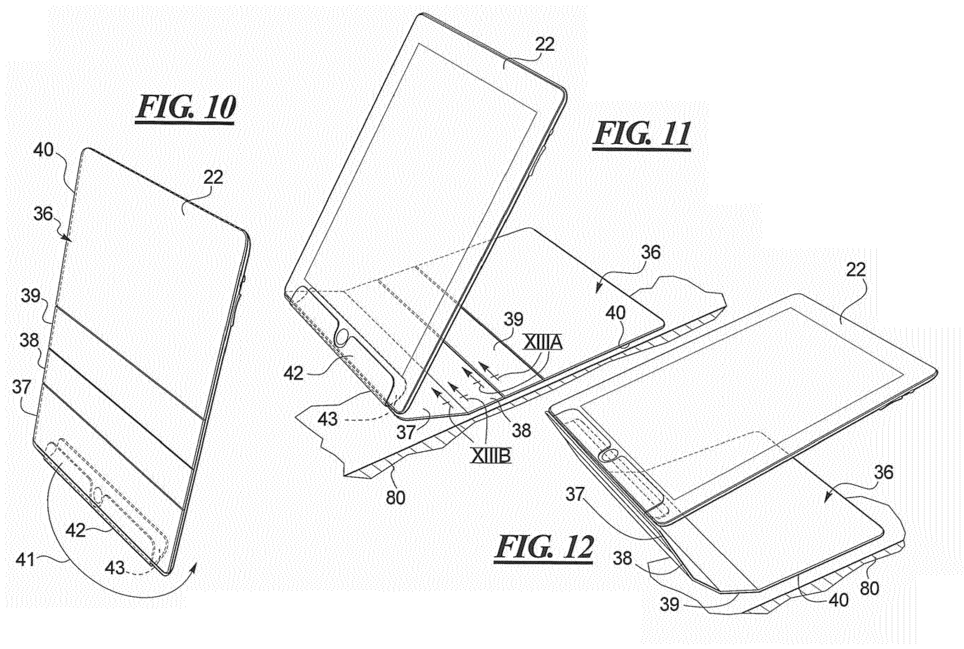

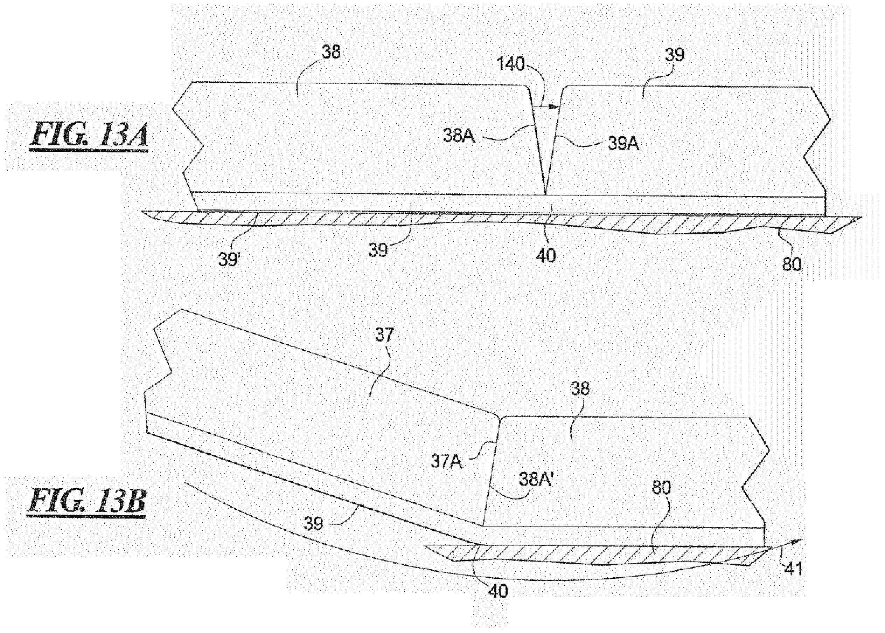

An important variation of the stand with the same functional principal is a stand shown at 36 attached to the computer tablet 22 with the same functional principal as the stand shown previously but which also serves as a cover for a screen on a front of the computer tablet 22. Here different rigid boards such as 37, 38, 39, and 40 shown in Figures 10, 11, and 12 function as the footprints in a four footprint embodiment, for example. Here the different boards such as 37 and 38 as shown in Figures 13A and 13B are tied together by a strong fabric 39 which works as a flexible articulation at 40 between the boards 38 and 39 (see Fig. 13A), for example. Where the boards come together the articulation is braced and the load bearing structure works again as one stiff piece as shown in Figures 10, 11 and 12.

In Figure 10 the cover is folded over in front of the screen of the tablet 22. In Figures 11 and 12 the cover has been deployed after folding around as shown by the circular arrow at 41 to provide the different footprints.

The thickness of the boards provides rigidity and also an abutment surface as shown at 38A, 39A in Fig. 13A, and 37A and 38A' in Fig. 13B. As illustrated in Fig. 13A, when the boards are in line with each other on flat surface 80, a gap 40 is provided between the abutment surfaces. However as shown in Fig. 13B, when the boards 37 and 38 are at an angle to each other, the abutment surfaces 37A and 38A' abut and provide the rigidity when the stand is resting on the respective footprint 38 such as shown in Fig. 11 and Fig. 13B on the surface 80. The strong fabric 39 may be covered with a soft fabric such as 39' shown in dashed lines in Fig. 13A to protect the tablet screen when the cover is closed against the tablet screen.

Fixation of the cover to the tablet is achieved by clamping the tablet between two metallic blades 42 and 43 as shown in Figures 10 and 11 most clearly. This can be accomplished with a soft and sticky surface on an inside (for example rubber). Also other ways of fixation can be employed.

It may thus be appreciated that the stand functioning as a cover has a same functional principal like the one-piece stand shown in Figures 1A, 2A, and 3A.

The material employed for the stand has importance since different material characteristics can have an influence on function, geometry, and design.

Specific weight has an influence on a position of the common center of gravity 23A, 23B, 23C, or 24A, 24B, 24C in respective Figures 1A/2A/3A and 1B/2B/3B and consequently on a distance between the common center of gravity and footprint (the radius of the sectional arc) respectively on the size of the stand. A lighter specific weight leads to a bigger radius, and a heavy specific weight leads to a smaller radius and therefore a small stand.

A modulus of elasticity of the material has an important influence on a stiffness of the stand. Stiffness is important to keep vibrations as small as possible and therefore keep the tablet stable.

Characteristics in combination with methods of manufacture make synthetic materials like thermosets (phenolic resin or melamin, for example) and also thermoplasts with high modulus elasticity like polycarbonate a preferred choice for the stand.

For esthetic reasons hardwood types or ceramic materials are also possible.

Although preferred exemplary embodiments are shown and described in detail in the drawings and in the preceding specification, they should be viewed as purely exemplary and not as limiting the invention. It is noted that only preferred exemplary embodiments are shown and described, and all variations and modifications that presently or in the future lie within the protective scope of the invention should be protected.

The center of gravity of a tablet computer 1 is not necessarily positioned in its geometrical center 0. The center of gravity can be found by placing the tablet computer on a linear edge 301 and balancing it as good as possible. Doing this in horizontal and vertical direction allows to determine the center of gravity of the tablet with a tolerance of about one millimeter, which is consistent with the needed accuracy.

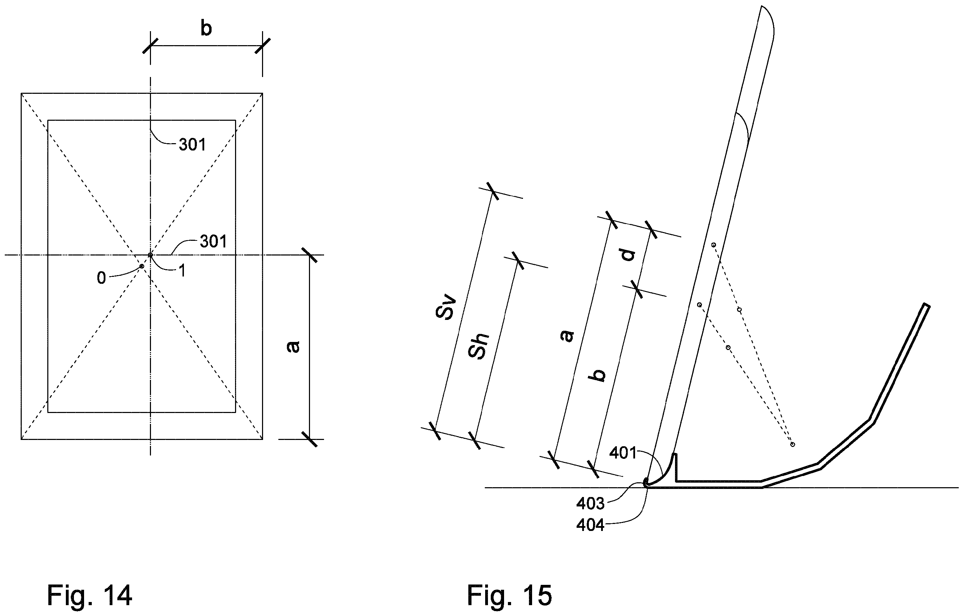

Fig. 14 shows a tablet computer in front view. The difference between the position of the geometrical center and the position of the center of gravity in relation to the depth of the tablet is minimal and can be ignored. It must be said, that the center of gravity usually is positioned very close to the geometrical center of the tablet computer (between 0 an 5 mm). Within this margins and assuming usual tolerances the center of gravity and the geometrical center can be seen as one.

The stability of the stand together with a tablet computer depends on the distance between the two common centers of gravity 1a (vertical position) and 1b (horizontal position) in relation to the size of the tablet computer. As this distance d between these two centers of gravity depends on the geometry and format of the tablet computer it can be described with regard to Fig. 15. as follows:

$$d = a - b$$

wherein

a is the distance between the center of gravity of the tablet computer in vertical position and the lower edge of the tablet computer 403 and b is the distance between the center of gravity of the tablet computer in horizontal position and the lower edge of the tablet computer 403. 404 is the lower front edge of the stand. In the examples of the stands shown until now 403 and 404 are nearly the same and can be seen as one.

Sv is the distance between the center of gravity of the tablet computer in vertical position and the lower front edge of the stand 404.

Sh is the distance between the center of gravity of the tablet computer in horizontal position and the lower front edge of the stand 404.

The relation R between Sv and Sh is described as follows:

$$R = Sv / Sh \quad \text{with } Sv > Sh.$$

The smaller R respectively the closer to the value 1 or the smaller the distance d the more different footprints can be realized or the higher the stability for each footprint.

Tablet computers with very elongated shapes show a big distance d between the two common centers of gravity respectively a higher value for R, resulting in less stability of the stand.

This can be faced by the following measures:

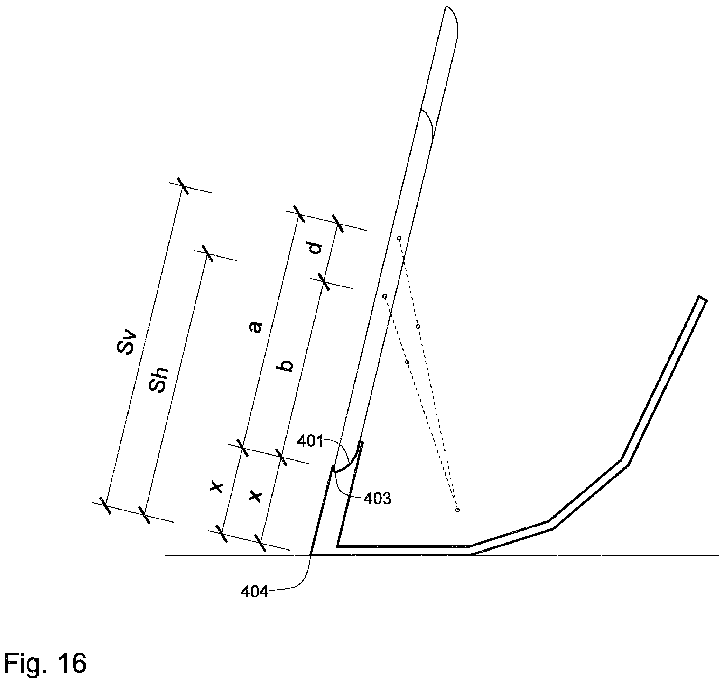

1. Reducing the number of footprints
A stand with less footprints will be more stable because the angles between the different positions are bigger and so the angles for tilting towards the next or the previous footprint can be made bigger, see for instance Fig. 4A and 4B Angles A and B.
2. Lifting the tablet computer, see for instance Fig. 16.
Increasing the distance x between the lower edge of the tablet computer 403 and the lower edge of the stand 404 results in a better relation between Sv and Sh. R becomes smaller.

$$R = Sv / Sh$$

$$R_x = ( a + x ) / ( b + x )$$

this results in: $R_x < R$
3. Horizontal and vertical position with same center of gravity

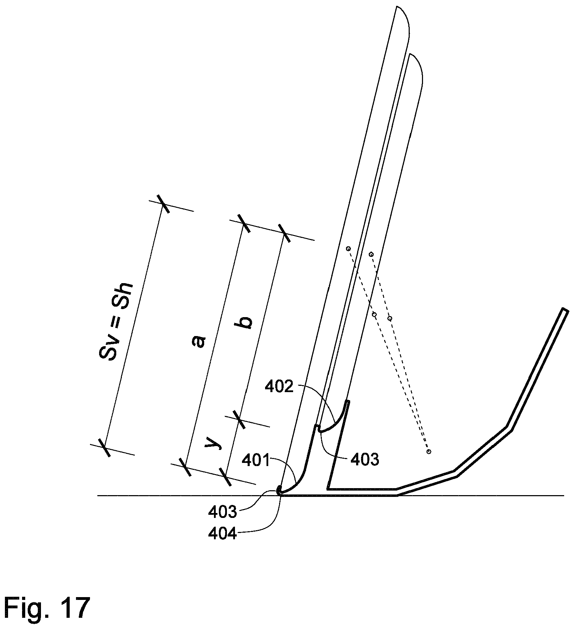

a) Two receiving surfaces for the tablet computer, see for instance Fig. 17. The tablet stand provides two receiving surfaces 401 and 402. 401 is for vertical use of the tablet, 402 is for horizontal use of the tablet computer. As 402 is lifted up from the lower front edge of the stand 404 by the length y we get:

$$R = Sv / Sh$$

$$R_y = a / ( b + y ) \approx 1 \quad \text{(is nearly 1)}$$

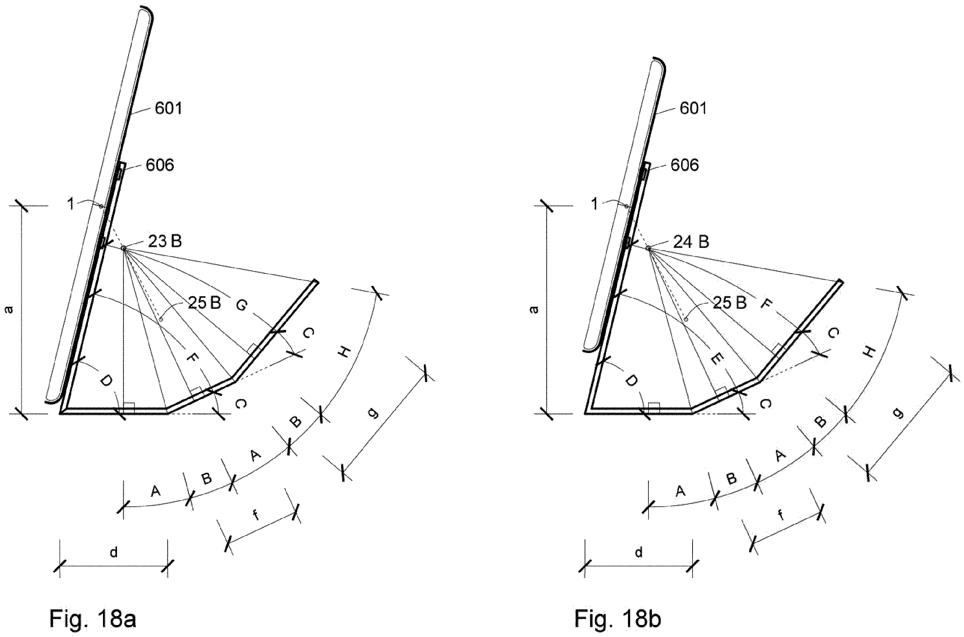

b) Fixation for tablet computer in same position, see for instance Fig. 18, 19, 20, 21, 22.

The tablet computer is put in a cover 601 which is not part of the stand. The cover has a fixation device on the back 606 (buttons, magnets, etc.) to attach the tablet computer to the stand in horizontal and vertical position with the center gravity / geometrical center at the same position (1a).

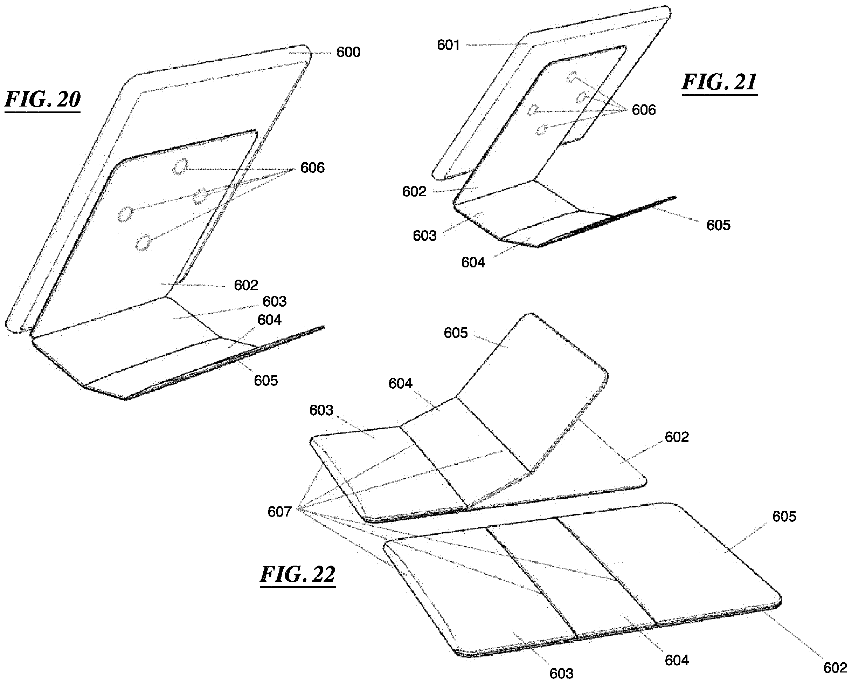

Fig. 18a and Fig. 20 show a three footprint stand with the tablet computer in vertical position, Fig. 18b and Fig. 21 show the same stand with the tablet computer in horizontal position.

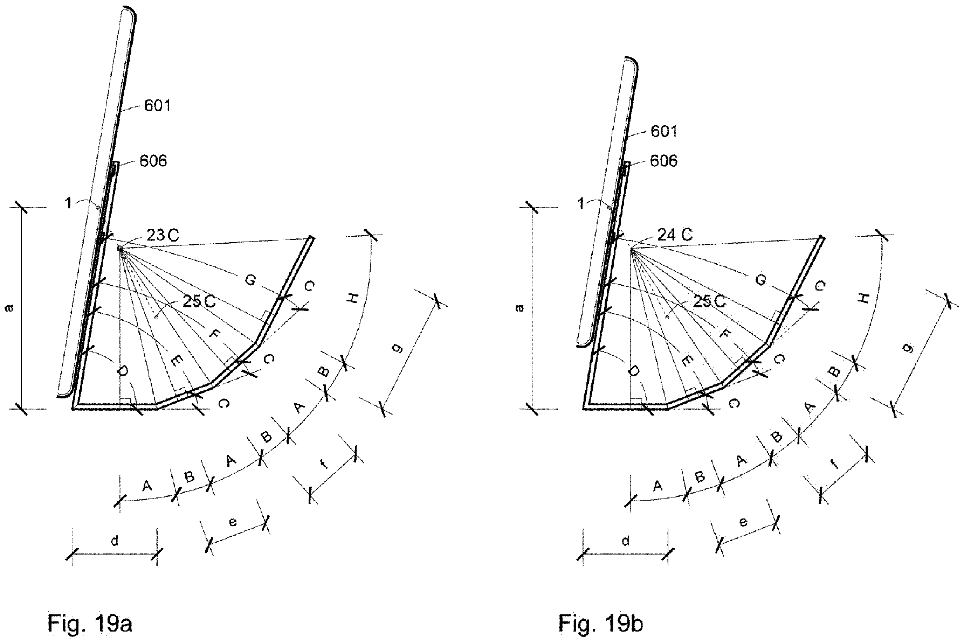

Fig. 19a shows a four footprint stand with the tablet computer in vertical position, Fig. 19b shows the same stand with the tablet computer in horizontal position.

Measure 2 and 3 allow to make the angles A and B (Fig. 2c, 2d, and 2e) bigger and the stand becomes more stable for the same amount of footprints, or the amount of different footprints can be increased.

The stand of Fig. 18, 19 can be built as a one-piece construction or a foldable device, see Fig. 20 - Fig. 22. A front board 602 provides the fixation devices 606 to attach the tablet computer to the stand. It is conected to the footprint boards 603, 604, 605 by a strong fabric the same way as shown in Fig. 10, 11 and 12 and Fig. 13a and 13b. The articulations 607 in Fig. 22 are stabilized by the gravitational forces and make the stand work the same way as a one-piece stand. Additionally the facing surfaces 38A and 29A (Fig. 13a, 13b) can be equipped with magnets to keep the articulation in position even without gravitational forces.
The articulations in Fig. 12, 13, 20, 21 and 22 are only needed for giving the stand a flat shape for transportation. These articulations are not needed to make the stand work as a stand as described on the previous one-piece constructions.

In general for all stands the following values and relations can be defined, which are shown for instance in Fig. 18 and 19:

a) For a three-footprint stand the angles C between the different footprints range around 22 and 28 °.

b) For a four-footprint stand the angles C between the different footprints range around 19 and 25 °.

c) For a three-footprint stand (Fig. 18) the provided angles for the tablet computer range around the following values.

Angle D (first footprint): 70 to 85 °.

Angle F (second footprint): 40 and 60°.

Angle G (third footprint): 15 and 30°.

d) For a four-footprint stand (Fig. 19) the provided angles for the tablet computer range around the following values.

Angle D (first footprint): 70 to 85°.

Angle E (second footprint): 55 and 65 °.

Angle F (second footprint): 32 and 42 °.

Angle G (third footprint): 12 and 22°.

e) The angles A and B between a stable position on one of the footprints and an angle when the stand starts to tilt to the next and the previous footprint range around the following values.

Angle A: 10 to 20°.

Angle B: 5 to 15 °.

f) The angle H between the stable position on the last footprint and an angle when the stand starts to tilt backwards should have a minimum value of 25 °.

g) The height of the center of gravity / geometrical center of the tablet computer a and the horicontal length of the first footprint d stand in a relation of:

$$a/d = 1{,}8 - 2{,}5$$

h) The length of the first footprint d and the second footprint f (Fig. 18) or e (Fig. 19) stand in a relation of:

$$d/f \text{ or } d/e = 1{,}2 - 1{,}7$$

i) The length of the second footprint e (Fig. 19) and third footprint f (Fig. 19) stand in a relation of: e/f = 0,8 - 1,1

j) The length of the second last footprint f and the last footprint g stand in a relation of: f/g = 0,3 - 0,7.

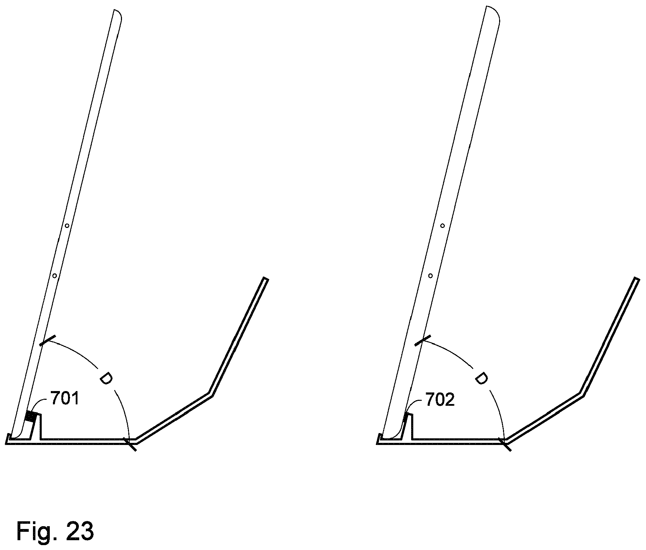

In Fig. 23 two times the same stand with two different adaptors for the use of tablet computers with different thicknesses is shown. To make a stand work for different tablet computers with different thicknesses but similar heights and widths different adaptors 701 and 702 on the back of the receiving surface make sure that the different tablet computers are supported with the same angle D respectively to the stand. Each adaptor is specially made for a certain kind of tablet computer. The adaptors can be fixed to the stand by either an adhesive film, a clamping device or a magnetic attachment device. The adaptors have a width closely to the width of the stand in order to provide a continuous support of the tablet computer along the whole width of the stand. The adaptors should be made out of a strong material to provide a stable support of the tablet computer, preferably a hard plastic.

**Claims**

1. A tablet computer stand (10, 11, 12) for supporting a computer shaped as a tablet (22) on a support surface, comprising:

   at least first and second footprints (13, 14, 15, 16, 18, 19) joined with each other in such a manner that they are positionable or positioned at an angle to one another, at a front end of the first footprint a receiving surface (27) receiving an end of the tablet (22) to support the tablet (22) on the stand (10, 11, 12); and
   the footprints (13, 14, 15, 16, 18, 19) being dimensioned and positionable or positioned relative to the tablet end receiving surface (27) such that the stand (10, 11, 12) with the tablet (22) thereon is stable when either the first or the second footprint (13, 14, 15, 16, 18, 19) is resting on said support surface, **characterised in that** the entire stand (10, 11, 12) is of one piece integral construction, wherein at least the first and second footprints (13, 14, 15, 16, 18, 19) are fixed at an angle to one another, the footprints (13, 14, 15, 16, 18, 19) are positioned relative to the tablet end receiving surface (27) such that the stand (10, 11, 12) with the tablet (22) thereon is stable when either the first or the second footprint (13, 14, 15, 16, 18, 19) is resting on said support surface.

2. The stand (10, 11, 12) according to claim 1, wherein an angle (D) between the tablet end receiving surface (27) and the surface of the first footprint (13, 15, 18) is 73° to 85°, and an angle (F) between the tablet end receiving surface (27) and the surface of the second footprint (14, 16, 19) is 40° to 60°.

3. The stand (10, 11, 12) according to one of the preceding claims, wherein at least three footprints (15, 16) are provided and wherein a first angle is defined between the first and second footprints (15, 16) and a second angle is also defined between the second and third footprints (16, 17).

4. The stand (10, 11, 12) according to one of the preceding claims, wherein at least four footprints (18, 19, 20, 21) are provided and a first angle is provided between the first and second footprints (18, 19), a second angle is provided between the second and third footprints (19, 20), and a third angle is provided between the third and fourth footprints (20, 21).

**5.** The stand (10, 11, 12) according to one of the preceding claims, wherein said receiving surface (27) has an aperture (32) therein for allowing a plug to be passed there through for plugging into said tablet (22).

**6.** The stand (10, 11, 12) according to one of the preceding claims, wherein said footprints (13, 14, 15, 16, 17, 18, 19, 20, 21) each have a concave shape (90) at a bottom surface for resting on said support surface.

**7.** The stand (10, 11, 12) according to one of the preceding claims , wherein said first and second footprints (37, 38) being joined by a flexible material covering and attached to one side of the footprints (37, 38), a portion of said flexible material forming an articulation (40) where the first and second footprints (37, 38) abut one another at said angle such that in an open portion of the cover (601) with the second footprint (38) on said support surface, said angle between the first and the second footprints (37, 38) is maintained by abutting edges between said first and second footprints (37, 38).

**8.** The stand 10, 11, 12 according to claim 7, wherein three footprints (37, 38, 39) are provided with articulations between the first and second, and second and third footprints (37, 38, 39).

**9.** The stand (10, 11, 12) according to one of the claims 7 and 8, wherein a material is attached to one side of said flexible material for protecting the cover (601) when it is laid against said screen in said closed position, wherein that material is softer and thinner as the flexible material.

**10.** System, comprising a stand (10, 11, 12) as claimed in at least one of the claims 1 to 9 and a tablet computer (22), wherein the tablet computer (22) is rectangular with shorter and longer sides and has a vertical position (24A, 24B, 24C) with the longer sides sloped upwardly and a horizontal position (22') with the longer sides extending horizontally, and with the tablet computer (22) on the stand (10, 11, 12) in the vertical position (24A, 24B, 24C) and a common center of gravity (23A, 23B, 23C) of the tablet computer (22) plus the stand (10, 11, 12) being defined, and wherein a perpendicular line intersecting with the first footprint (13, 14, 15, 16, 17, 18, 19, 20, 21) passes through the common center of gravity (23A, 23B, 23C) and another line extending from a point where the first and second footprints (13, 14, 15, 16, 17, 18, 19, 20, 21) meet at said angle also passes through the common center of gravity (23A, 23B, 23C), a minimum angle between said perpendicular line and said another line is 10°.

**11.** System, comprising a stand (10, 11, 12) as claimed in at least one of the claims 1 to 9 and a tablet computer (22), wherein the tablet computer (22) is rectangular with shorter and longer sides and has a vertical position (24A, 24B, 24C) with the longer sides extending upwardly and a horizontal position (22') with the longer sides extending horizontally, and with the tablet computer (22) on the stand (10, 11, 12) in a horizontal position (22') and a common center of gravity (23A, 23B, 23C) of the tablet computer (22) plus the stand (10, 11, 12) being defined, and wherein a perpendicular line intersecting with the second footprint (13, 14, 15, 16, 17, 18, 19, 20, 21) passes through the common center of gravity (23A, 23B, 23C) and another line extending from a point where the first and second footprints (13, 14, 15, 16, 17, 18, 19, 20, 21) meet at said angle also passes through the common center of gravity (23A, 23B, 23C), a minimum angle between said perpendicular line and said another line is 5°.

**12.** Method for emission of optical and/or aural information from a computing system, and/or for input of information into a computing system, comprising the following steps:

> i) providing a tablet computer (22),
> ii) providing a stand (10, 11, 12) as claimed in at least one of the claims 1 to 9,
> iii) putting the tablet computer (22) on the stand (10, 11, 12) such that the tablet computer (22) is supported by the stand (10, 11, 12),
> iv) emitting optical and/or aural information from the tablet computer (22), and/or inputting information into the tablet computer (22).

**13.** Use of a stand (10, 11, 12) as claimed in at least one of the claims 1 to 9 for emission of optical and/or aural information from a tablet computer (22), wherein the tablet computer (22) emitting the optical and/or acoustical information is supported by the stand (10, 11, 12).

**14.** Use of a stand (10, 11, 12) as claimed in at least one of the claims 1 to 9 for inputting, storage and/or processing information in a tablet computer (22), wherein the tablet computer (22) receiving, storing and/or processing the information is supported by the stand (10, 11, 12).

**Patentansprüche**

**1.** Ein Tabletcomputerständer (10, 11, 12) zur Abstützung eines als Tablet (22) ausgeformten Computers auf einer Auflagefläche, umfassend:

> mindestens erste und zweite Standflächen (13, 14, 15, 16, 18, 19), die miteinander in solcher Weise verbunden sind, dass sie in einem Winkel zueinander positionierbar oder positioniert sind, an einem vorderen Ende der ersten Standfläche eine Aufnahmefläche (27) zur Aufnahme eines Endes des Tablets (22), um das Tablet (22) auf dem Ständer (10, 11, 12) abzustützen; und wobei die Standflächen (13, 14, 15, 16, 18, 19) bezüglich der Aufnahmefläche (27) zur Aufnahme des Endes des Tablets derart bemessen und positionierbar oder positioniert sind, dass der Ständer (10, 11, 12) mit dem Tablet (22) darauf stabil ist, wenn entweder die erste oder die zweite Standfläche (13, 14, 15, 16, 18, 19) auf besagter Auflagefläche aufliegt, **dadurch gekennzeichnet, dass** der gesamte Ständer (10, 11, 12) eine einstückige integrale Konstruktion ist, wobei mindestens die ersten und zweiten Standflächen (13, 14, 15, 16, 18, 19) in einem Winkel zueinander befestigt sind, die Standflächen (13, 14, 15, 16, 18, 19) sind bezüglich der Aufnahmefläche (27) zur Aufnahme des Endes des Tablets derart positioniert, dass der Ständer (10, 11, 12) mit dem Tablet (22) darauf stabil ist, wenn entweder die erste oder die zweite Standfläche (13, 14, 15, 16, 18, 19) auf der besagten Auflagefläche aufliegt.

2. Der Ständer (10, 11, 12) nach Anspruch 1, wobei ein Winkel (D) zwischen der Aufnahmefläche (27) zur Aufnahme des Endes des Tablets und der Oberfläche der ersten Standfläche (13, 15, 18) 73° bis 85° beträgt, und ein Winkel (F) zwischen der Aufnahmefläche (27) zur Aufnahme des Endes des Tablets und der Oberfläche der zweiten Standfläche (14, 16, 19) 40° bis 60° beträgt.

3. Der Ständer (10, 11, 12) nach einem der vorherigen Ansprüche, wobei mindestens drei Standflächen (15, 16) bereitgestellt sind und wobei ein erster Winkel zwischen den ersten und der zweiten Standflächen (15, 16) definiert ist und ein zweiter Winkel ebenfalls zwischen den zweiten und dritten Standflächen (16, 17) definiert ist.

4. Der Ständer (10, 11, 12) nach einem der vorherigen Ansprüche, wobei mindestens vier Standflächen (18, 19, 20, 21) bereitgestellt sind und ein erster Winkel zwischen den ersten und zweiten Standflächen (18, 19) bereitgestellt ist, ein zweiter Winkel zwischen den zweiten und dritten Standflächen (19, 20) bereitgestellt ist und ein dritter Winkel zwischen den dritten und vierten Standflächen (20, 21) bereitgestellt ist.

5. Der Ständer (10, 11, 12) nach einem der vorherigen Ansprüche, wobei besagte Aufnahmefläche (27) eine Öffnung darin (32) hat, um dort hindurch ein Durchführen eines Steckers zum Einstecken in besagtes Tablet (22) zu erlauben.

6. Der Ständer (10, 11, 12) nach einem der vorherigen Ansprüche, wobei besagte Standflächen (13, 14, 15, 16, 17, 18, 19, 20, 21) jeweils eine konkave Form (90) an einer Unterseite zum Aufliegen auf besagter Auflagefläche haben.

7. Der Ständer (10, 11, 12) nach einem der vorherigen Ansprüche, wobei besagte erste und zweite Standflächen (37, 38) durch ein flexibles Material verbunden sind, das eine Seite der Standflächen (37, 38) bedeckt und an ihr befestigt ist, wobei ein Abschnitt besagten flexiblen Materials eine Gelenkverbindung (40) ausbildet, wo die ersten und die zweiten Standflächen (37, 38) in besagtem Winkel aneinander angrenzen, so dass in einem offenen Bereich der Abdeckung (601) mit der zweiten Standfläche (38) auf besagter Auflagefläche besagter Winkel zwischen der ersten und der zweiten Standfläche (37, 38) durch aneinander angrenzende Kanten zwischen besagten ersten und zweiten Standflächen (37, 38) aufrechterhalten wird.

8. Der Ständer (10, 11, 12) nach Anspruch 7, wobei drei Standflächen (37, 38, 39) mit Gelenkverbindungen zwischen der ersten und zweiten sowie zweiten und dritten Standfläche (37, 38, 39) bereitgestellt sind.

9. Der Ständer (10, 11, 12) nach einem der Ansprüche 7 und 8, wobei ein Material an einer Seite besagten flexiblen Materials zum Schutz der Abdeckung (601), wenn diese in besagter geschlossener Position gegen besagten Bildschirm gelegt ist, befestigt ist wobei dieses Material weicher und dünner als das flexible Material ist.

10. System, umfassend einen Ständer (10, 11, 12) gemäß mindestens einem der Ansprüche 1 bis 9 und einen Tabletcomputer (22), wobei der Tabletcomputer (22) rechteckig mit kürzeren und längeren Seiten ist und eine vertikale Position (24A, 24B, 24C) mit den längeren Seiten aufwärts geneigt und eine horizontale Position (22') mit den längeren Seiten sich horizontal erstreckend hat, und mit dem Tabletcomputer (22) auf dem Ständer (10, 11, 12) in der vertikalen Position (24A, 24B, 24C) und ein gemeinsamer Massenschwerpunkt (23A, 23B, 23C) des Tabletcomputers (22) zuzüglich des Ständers (10, 11, 12) definiert ist, und wobei eine senkrechte Gerade, die die erste Standfläche (13, 14, 15, 16, 17, 18, 19, 20, 21) schneidet, durch den gemeinsamen Massenschwerpunkt (23A, 23B, 23C) verläuft und eine weitere Gerade, die sich von einem Punkt erstreckt, an dem die ersten und zweiten Standflächen (13, 14, 15, 16, 17, 18, 19, 20, 21) auf besagten Winkel treffen, ebenfalls durch den gemeinsamen Massenschwerpunkt (23A, 23B, 23C) verläuft, ein minimaler Winkel zwischen genannter senkrechter Geraden und besagter weiterer Geraden 10° beträgt.

11. System, umfassend einen Ständer (10, 11, 12) gemäß mindestens einem der Ansprüche 1 bis 9 und einen Tabletcomputer (22), wobei der Tabletcomputer (22) rechteckig mit kürzeren und längeren Seiten ausgebildet ist, und eine vertikale Position (24A, 24B, 24C) mit den längeren Seiten sich aufwärts erstreckend und eine horizontale Position (22') mit den längeren Seiten sich horizontal erstreckend hat, und mit dem Tabletcomputer (22) auf dem Ständer (10, 11, 12) in der horizontalen Position (22'), wobei ein gemeinsamer Massenschwerpunkt (23A, 23B, 23C) des Tabletcomputers (22) zuzüglich des Ständers (10, 11, 12) definiert ist, und wobei eine senkrechte Gerade, die die zweite Standfläche (13, 14, 15, 16, 17, 18, 19, 20, 21) schneidet, durch den gemeinsamen Massenschwerpunkt (23A, 23B, 23C) verläuft, und eine weitere Gerade, die sich von einem Punkt erstreckt, an dem die ersten und zweiten Standflächen (13, 14, 15, 16, 17, 18, 19, 20, 21) auf besagten Winkel treffen, ebenfalls durch den gemeinsamen Massenschwerpunkt (23A, 23B, 23C) verläuft, ein minimaler Winkel zwischen der senkrechten Geraden und der besagten weiteren Geraden 5° beträgt.

12. Verfahren zur Ausgabe optischer und/oder auditiver Informationen von einem Rechnersystem und/oder zur Eingabe von Informationen in ein Rechnersystem, umfassend die folgenden Schritte:

i) Bereitstellen eines Tabletcomputers (22),
ii) Bereitstellen eines Ständers (10, 11, 12) gemäß mindestens einem der Ansprüche 1 bis 9,
iii) Legen des Tabletcomputers (22) auf den Ständer (10, 11, 12), so dass der Tabletcomputer (22) von dem Ständer (10, 11, 12) abgestützt ist,
iv) Ausgeben optischer und/oder auditiver Informationen vom Tabletcomputer (22) und/oder Eingeben von Informationen in den Tabletcomputer (22).

13. Verwendung eines Ständers (10, 11, 12) gemäß mindestens einem der Ansprüche 1 bis 9 zum Ausgeben von optischen und/oder auditiven Informationen von einem Tabletcomputer (22), wobei der Tabletcomputer (22), der die optischen und/oder akustischen Informationen ausgibt, von dem Ständer (10, 11, 12) abgestützt wird.

14. Verwendung eines Ständers (10, 11, 12) gemäß mindestens einem der Ansprüche 1 bis 9 zum Eingeben, Speichern und/oder Verarbeiten von Informationen in einem Tabletcomputer (22), wobei der Tabletcomputer (22), der die Informationen erhält, speichert und/oder verarbeitet, von dem Ständer (10, 11, 12) abgestützt wird.

## Revendications

1. Support d'ordinateur tablette (10, 11, 12) pour supporter un ordinateur formé comme une tablette (22) sur une surface support, comprenant :

au moins des première et deuxième empreintes (13, 14, 15, 16, 18, 19) jointes les unes aux autres de telle sorte qu'elles peuvent être positionnées ou sont positionnées avec un angle l'une par rapport à l'autre, une surface de réception (27), à une extrémité frontale de la première empreinte, recevant une extrémité de la tablette (22) pour supporter la tablette (22) sur le support (10, 11, 12) ; et
les empreintes (13, 14, 15, 16, 18, 19) étant dimensionnées et pouvant être positionnées ou étant positionnées relativement à la surface de réception d'extrémité de tablette (27) de telle sorte que le support (10, 11, 12) avec la tablette (22) sur celui-ci est stable lorsque soit la première, soit la deuxième empreinte (13, 14, 15, 16, 18, 19) repose sur ladite surface support, **caractérisé en ce que**
le support entier (10, 11, 12) est une construction d'une seule pièce, au moins les première et deuxième empreintes (13, 14, 15, 16, 18, 19) étant fixées avec un angle l'une par rapport à l'autre, les empreintes (13, 14, 15, 16, 18, 19) étant positionnées relativement à la surface de réception d'extrémité de tablette (27) de telle sorte que le support (10, 11, 12) avec la tablette (22) sur celui-ci est stable lorsque soit la première, soit la deuxième empreinte (13, 14, 15, 16, 18, 19) repose sur ladite surface support.

2. Support (10, 11, 12) selon la revendication 1, un angle (D) entre la surface de réception d'extrémité de tablette (27) et la surface de la première empreinte (13, 15, 18) étant de 73° à 85°, et un angle (F) entre la surface de réception d'extrémité de tablette (27) et la surface de la deuxième empreinte (14, 16, 19) étant de 40° à 60°.

3. Support (10, 11, 12) selon l'une quelconque des revendications précédentes, au moins trois empreintes (15, 16) étant fournies et un premier angle étant

**12**

défini entre les première et deuxième empreintes (15, 16) et un deuxième angle étant également défini entre les première et deuxième empreintes (16, 17).

4. Support (10, 11, 12) selon l'une quelconque des revendications précédentes, au moins quatre empreintes (18, 19, 20, 21) étant fournies et un premier angle étant fourni entre les première et deuxième empreintes (18, 19), un deuxième angle étant fourni entre les deuxième et troisième empreintes (19, 20) et un troisième angle étant fourni entre les troisième et quatrième empreintes (20, 21).

5. Support (10, 11, 12) selon l'une quelconque des revendications précédentes, ladite surface de réception (27) présentant une ouverture (32) dans celle-ci pour permettre à une prise d'être passée au travers pour être branchée sur ladite tablette (22).

6. Support (10, 11, 12) selon l'une quelconque des revendications précédentes, lesdites empreintes (13, 14, 15, 16, 17, 18, 19, 20, 21) ayant chacune une forme concave (90) sur une surface de fond pour reposer sur ladite surface support.

7. Support (10, 11, 12) selon l'une quelconque des revendications précédentes, les première et deuxième empreintes (37, 38) étant jointes par un matériau souple, recouvrant, et attaché à, un côté des empreintes (37, 38), une portion dudit matériau souple formant une articulation (40) où les première et deuxième empreintes (37, 38) sont contiguës l'une à l'autre en formant ledit angle, tel que, dans une portion ouverte de la couverture (601) avec la deuxième empreinte (38) sur ladite surface support, ledit angle entre les première et deuxième empreintes (37, 38) est maintenu par des bords contigus entre les première et deuxième empreintes (37, 38).

8. Support (10, 11, 12) selon la revendication 7, trois empreintes (37, 38, 39) étant fournies avec des articulations entre les première et deuxième, et entre les deuxième et troisième empreintes (37, 38, 39).

9. Support (10, 11, 12) selon l'une quelconque des revendications 7 et 8, un matériau étant attaché sur un côté dudit matériau souple pour protéger la couverture (601) lorsqu'elle est posée contre ledit écran dans ladite position fermée, le matériau étant plus doux et plus mince que le matériau souple.

10. Système comprenant un support (10, 11, 12) tel que revendiqué selon au moins l'une des revendications 1 à 9 et un ordinateur tablette (22), l'ordinateur tablette (22) étant rectangulaire avec des côtés plus courts et plus longs et ayant une position verticale (24A, 24B, 24C) avec les côtés plus longs inclinés vers le haut et une position horizontale (22') avec les côtés plus longs s'étendant horizontalement, et avec l'ordinateur tablette (22) sur le support (10, 11, 12) dans une position verticale (24A, 24B, 24C) et un centre de gravité commun (23A, 23B, 23C) de l'ordinateur tablette (22) plus le support (10, 11, 12) étant défini, et une ligne perpendiculaire coupant la première empreinte (13, 14, 15, 16, 17, 18, 19, 20, 21) passant par le centre de gravité commun (23A, 23B, 23C) et une autre ligne s'étendant d'un point où les première et deuxième empreintes (13, 14, 15, 16, 17, 18, 19, 20, 21) se rencontrent avec ledit angle passant également par le centre de gravité commun (23A, 23B, 23C), un angle minimum entre ladite ligne perpendiculaire et ladite autre ligne étant de 10°.

11. Système comprenant un support (10, 11, 12) tel que revendiqué selon au moins l'une des revendications 1 à 9 et un ordinateur tablette (22), l'ordinateur tablette (22) étant rectangulaire avec des côtés plus courts et plus longs et ayant une position verticale (24A, 24B, 24C) avec les côtés plus longs s'étendant vers le haut et une position horizontale (22') avec les côtés plus longs s'étendant horizontalement, et avec l'ordinateur tablette (22) sur le support (10, 11, 12) dans une position horizontale (22') et un centre de gravité commun (23A, 23B, 23C) de l'ordinateur tablette (22) plus le support (10, 11, 12) étant défini, et une ligne perpendiculaire coupant la deuxième empreinte (13, 14, 15, 16, 17, 18, 19, 20, 21) passant par le centre de gravité commun (23A, 23B, 23C) et une autre ligne s'étendant d'un point où les première et deuxième empreintes (13, 14, 15, 16, 17, 18, 19, 20, 21) se rencontrent avec ledit angle passant également par le centre de gravité commun (23A, 23B, 23C), un angle minimum entre ladite ligne perpendiculaire et ladite autre ligne étant de 5°.

12. Procédé pour l'émission d'informations visuelles et/ou auditives par un système informatique, et/ou pour l'entrée d'information dans un système informatique, comprenant les étapes suivantes :

i) fournir un ordinateur tablette (22),
ii) fournir un support (10, 11, 12) tel que revendiqué par au moins l'une des revendications 1 à 9,
iii) mettre l'ordinateur tablette (22) sur le support (10, 11, 12) de telle sorte que l'ordinateur tablette (22) est supporté par le support (10, 11, 12),
iv) émettre des informations visuelles et/ou auditives avec l'ordinateur tablette (22), et/ou entrer des informations dans l'ordinateur tablette (22).

13. Utilisation d'un support (10, 11, 12) tel que revendiqué par au moins l'une des revendications 1 à 9 pour l'émission d'informations visuelles et/ou auditives par un ordinateur tablette (22), l'ordinateur tablette (22) émettant les informations visuelles et/ou auditives étant supporté par le support (10, 11, 12).

**14.** Utilisation d'un support (10, 11, 12) tel que revendiqué par au moins l'une des revendications 1 à 9 pour l'entrée, le stockage et/ou le traitement d'informations dans un ordinateur tablette (22), l'ordinateur tablette (22) recevant, stockant et/ou traitant les informations étant supporté par le support (10, 11, 12).

FIG. 1B

FIG. 1A

FIG. 2A

FIG. 2B

EP 2 962 033 B1

Fig. 02 c          Fig. 02 d          Fig. 02 e

*FIG. 3A*

*FIG. 3B*

FIG. 4A

FIG. 4B

*FIG. 5*

## FIG. 6

EP 2 962 033 B1

FIG. 8

FIG. 7

FIG. 9A

FIG. 9B

Fig. 09 c

EP 2 962 033 B1

*FIG. 10*

*FIG. 11*

*FIG. 12*

EP 2 962 033 B1

EP 2 962 033 B1

*FIG. 13A*

*FIG. 13B*

26

Fig. 15

Fig. 14

Fig. 16

EP 2 962 033 B1

Fig. 17

Fig. 18b

Fig. 18a

Fig. 19b

Fig. 19a

FIG.21

FIG.20

FIG.22

Fig. 23

**EP 2 962 033 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120261542 A1
- WO 2012054976 A